# EUROPEAN PATENT SPECIFICATION

(11) **EP 1 052 587 B1**
(45) Date of publication and mention of the grant of the patent: **13.08.2003**
(21) Application number: 99203860.4
(22) Date of filing: 19.11.1999
(51) Int. Cl.: G06F 17/60

(54) **Method for monitoring the working environment of employees of a company**
Verfahren zum Kontrollieren der Arbeitsumgebung von Betriebsangestellten
Procédé de contrôle de l'environnement de travail des employées d'une société

(30) Priority: 29.04.1999 NL 1011928
(43) Date of publication of application: 15.11.2000
(73) Proprietor: Meyermonitor B.V., 1077 ST Amsterdam (NL)
(72) Inventor: Lachotzki-Meyer, Maria Elisabeth Theodora, 1077 KD Amsterdam (NL); Lachotzki, Fred Willy Ido, Prof., 1077 KD Amsterdam (NL); Van Harmelen, Job Cornelis Willem, 3411 ZL Lopik (NL)
(74) Representative: de Vries, Johannes Hendrik Fokke

(56) References cited:
- WO-A-96/39668
- US-A- 5 740 035
- US-A- 5 832 211
- US-A- 5 842 195
- GOULD, GUREVICH,PAGEREY: "CONDUCTING SURVEYS OVER THE WORLD WIDE WEB" DATABASE STC , [Online] 1998, XP002183505 Retrieved from the Internet: <URL:www.stc.org/search_pubs.html> [retrieved on 2001-12-06]

## Description

The invention relates to a method for monitoring the working environment of employees of a company.

The Document" Conducting Surveys Over the World Wide Web" discloses a method for monitoring the working environment at at least one company, wherein the second computer system being connected to a computer network to provide a network site accessible for the employees by means of a computer connected to the network, the second computer system requesting an employee to enter user identification and password, wherein the second computer system compares the user identification and password entered to the user identifications and passwords are stored in the second database and upon a match presents on said network site a personal survey to each employee to obtain data on the working environment from the employee, storing the survey results in the second database together with the user identification, processing the survey results from a number of employees of one company to obtain averaged results on the working environment of this company and presenting the averaged results to the company.

For any company it is important to create a working environment which leads to corporate excellence. The ability to create such a working environment requires the ability to monitor the working environment and preferably to compare the working environment of the company with the same of other companies in a reliable manner. Monitoring the working environment requires the co-operation of employees which co-operation is difficult to obtain if anonymity is not guaranteed. Further monitoring of the working environment requires a relatively frequent survey among the employees which is time consuming with presently available survey tools. Moreover, comparison with competing companies is presently hardly possible.

It is therefore an object of the invention to provide a method of the above-mentioned type, wherein the anonymity of the employees surveyed to obtain data on the working environment is guaranteed and wherein the ease and speed to obtain this data and to compare results with benchmarks are improved.

Claim 1 discloses the preferred embodiment of this application.

To this end, a method for monitoring the working environment at at least one company comprises storing employee data and corresponding user identifications in a first database of a first computer system, forwarding a user identification and password to the employees and to a second computer system having a second database for storing the user identifications and passwords, wherein said second computer system is fully independent from the first computer system. As used herein, "fully independent" means that the second computer system is capable of conducting the survey of the employees without further assistance from the first computer system and that the first computer system can not access survey responses and correlate them with specific individuals or groups of individuals.

The second computer system can be connected to a computer network to provide a network site accessible for the employees by means of a computer connected to the network. The second computer requests an employee to enter user identification and password. The second computer compares the user identification and password entered to the user identifications and passwords as stored in the second database and upon a match presents on said network site a personal survey to each employee to obtain data on the working environment from the employee. The second computer stores the survey results in the second database together with the user identification, processes the survey results from a number of employees of one company to obtain averaged results on the working environment of this company and presents the averaged results to the company.

In this manner, a tool is obtained wherein by separating the first and second computer systems into fully independent systems the employee data with user identifications and passwords on the one side are stored independently of user identifications and survey results. Further, by presenting the survey to the employees through a network site, the employees can enter their data on the working environment at any location and at any suitable moment. The survey results are thereby immediately available in a format for processing by the second computer system, so that the survey results can be processed in any desired manner. It is therefore possible to regularly conduct a survey to monitor the working environment throughout the year so that company management obtains information on the effects of any measures taken to improve the working environment.

In addition, each personal survey can be monitored for completion by means of the second computer system, wherein user identifications of surveys which are not completed at a given time, are forwarded to the first computer system to obtain employee data to request the respective employees to complete the survey. In this manner, the response to the survey can be monitored either periodically or in real-time. Reminders to complete the survey can be sent to the employees using the first computer system without jeopardizing the anonymity of the employees. Response to the survey can be stimulated and thereby the overall time to complete the survey among all employees of a company can be restricted.

According to a preferred embodiment of the method of the invention, the survey presents a number of practical situations and for each practical situation allows to enter a score indicating to what extent this practical situation corresponds with the desired situation and the current situation. A weighted gap-index can be determined for each practical situation, said gap-index indicating the difference between the desired and current situations weighted for the indication provided by the employee. The survey results for a plurality of interrelated practical situations are averaged to obtain desired and current scores and weighted gap-indexes for main categories describing the working environment, storing all survey and averaged results and presenting all survey and averaged results to the company.

In this manner, the data obtained from the employees is immediately available in a manner highlighting the strengths and weaknesses of a company's working environment.

### BRIEF DESCRIPTION OF THE DRAWINGS

Fig. 1 is a block diagram of an exemplary computer environment for practicing and implementing the present invention.
Fig. 2 schematically shows a system in which an embodiment of the method of the invention is implemented.
Figs. 3-7 show screen images presented to an employee during carrying out the method of the invention.
Figs. 8-10 show presentations of the results obtained by the method of the invention.

### DETAILED DESCRIPTION OF ILLUSTRATIVE EMBODIMENT

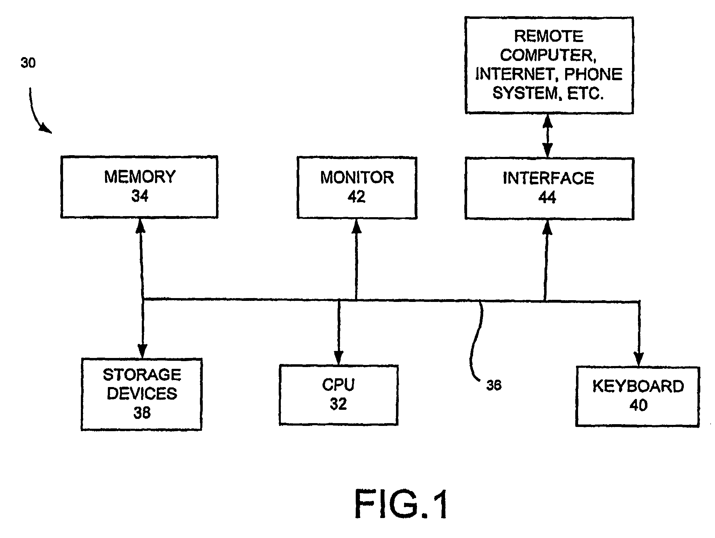

Before describing the invention in detail, a brief, general description of a suitable computing system illustrated in Fig. 1 that can be used in the present invention may be helpful. Although not required, the present invention will be described, at least in part, in the general context of computer-executable instructions, such as program modules, being executed by a computer 10. Generally, program modules include routine programs, objects, components, data structures, etc., which perform particular tasks or implement particular abstract data types. Tasks performed by the program modules are described below and with the aid of block diagram and screen displays. Those skilled in the art can implement the description, block diagrams and screen displays to computer-executable instructions. In addition, those skilled in the art will appreciate that the invention may be practiced with other computer system configurations, including multi-processor systems, networked personal computers, mini-computers, main frame computers, and the like. The invention may also be practiced in distributed computing environments where tasks are performed by remote processing devices that are linked through a communications network. In a distributed computer environment, program modules and/or data may be located in both local and remote memory storage devices.

The computer 30 illustrated in FIG. 1 comprises a conventional computer having a central processing unit (CPU) 32, memory 34 and a system bus 36, which couples various system components, including the memory 34 to the CPU 32. The system bus 36 may be any of several types of bus structures, including a memory bus or a memory controller, a peripheral bus, a network bus and a local bus using any of a variety of bus architectures. The memory 34 includes read only memory (ROM) and random access memory (RAM). A basic input/output (BIOS) containing the basic routine that helps to transfer information between elements within the computer 30, such as during start-up, is stored in ROM. Storage devices 38, such as a hard disk, a floppy disk drive, an optical disk drive, etc., are coupled to the system bus 36 and are used for storage of program modules and data. It should be appreciated by those skilled in the art that other types of computer readable media that are accessible by a computer, such as magnetic cassettes, flash memory cards, digital video disks, random access memories, read only memories, and the like, may also be used as storage devices. Commonly, programs are loaded into memory 34 from at least one of the storage devices 38 with or without accompanying data.

An input device 40 such as a keyboard, pointing device (mouse), or the like, allows an operator to provide commands to the computer 30. A monitor 42 or other type of output device is further connected to the system bus 36 via a suitable interface and provides feedback to the operator. Computer 30 can communicate to other computers, or a network of computers, such as the Internet through a communications link, and an interface 44, such as a modem. In one embodiment, computer 30 can organize, present and solicit information to and from a person being surveyed through a "Website" commonly used on the Internet. In such a situation, the computer 30 is identified as a server, while remote computers are identified as clients. Remote customers can access the Website using a conventional desktop computer or other Internet device and a browser such as MICROSOFT EXPLORER or NETSCAPE NAVIGATOR.

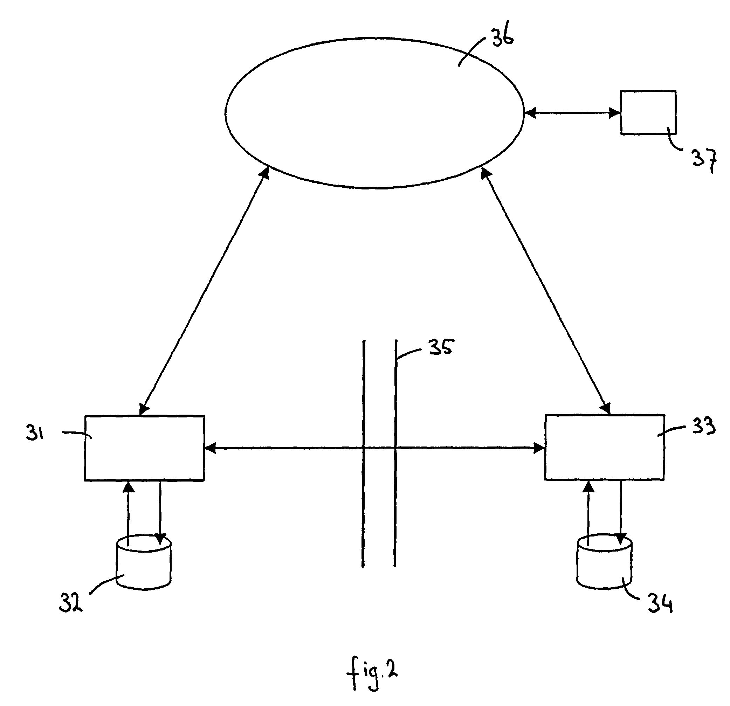

Referring to Fig. 2 there is schematically shown a first computer system 31 having a first database 32 for storing employee data, such as employee names and address information and corresponding user identifications. If a company wishes to use the method described herein, the employee data is forwarded to a trusted third party operating the computer system 31. The computer system 31 is used to generate the user identifications and initial passwords for the employees participating in the survey to monitor the working environment of the company. The trusted third party will send the user identifications and initial passwords to the participants and will further send the user identifications and initial passwords and possibly additional depersonalized information to the survey firm operating a second computer system 33. This second computer system 33 is also provided with a database for storing the user identifications and survey results obtained as will be explained hereinafter. It is important to note that the first and second computer systems are fully independent from each other so that the trusted third party on the one side and the survey firm on the other side have no possibility at all to couple survey results to names of employees. In this manner absolute anonymity of the participants is guaranteed. The independence of the computer systems 31 and 33 is schematically indicated by the separation lines 35 in FIG. 2.

Of course messages can be exchanged between the trusted third party and the survey firm to facilitate all correspondence between the survey firm and individual participants where necessary. As an example, it is noted that the second computer system 33 can be adapted to monitor each personal survey for completion. The user identifications of surveys that are not completed at a given time, are forwarded to the first computer system to obtain corresponding employee data. The trusted third party can request the respective employees to complete the survey. In this manner, the response to the survey can be monitored either periodically or even in real-time.

As schematically indicated, the second computer system 33 is connected to a computer network 36 and provides a network site or website on this network 36, which is accessible for the participating employees by means of a computer 37 also connected to the network 36. The first computer system 31 can be connected to the same network 36 to send messages to the participating employees by email. As the network 36 is, for example, a global computer network such as the Internet or a company's intranet, a participating employee can access the network site at any desired location and any desired moment.

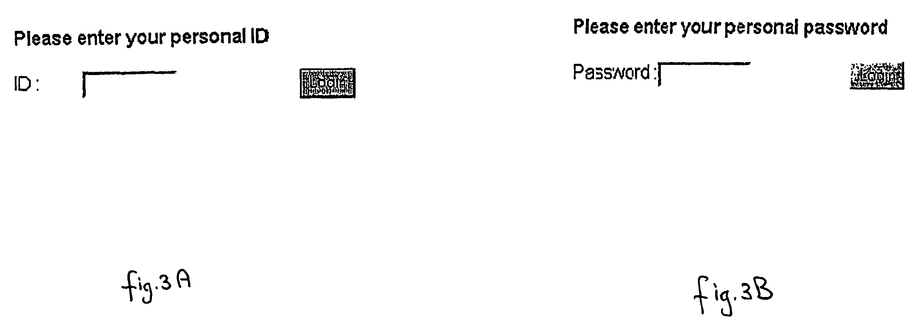

When an employee has accessed the network site, two successive pages are presented as shown in Figs. 3A and 3B, requesting the employee to enter a personal user identification and password, respectively. The computer 33 compares the user identification and password entered to the user identifications and passwords stored in the database 34 and upon a match presents a personal survey to the employee. At a first login, the computer system 33 may require the participant to change his password into a new password, for example a password of the question and answer type. With such a password, the participating employee enters a personal question and a personal answer and each time the employee accesses the network site, the computer system 33 will ask this personal question, after which the employee needs to enter the personal answer. This provides for a further guarantee of anonymity whereas others are prevented from accessing the personal survey of the employee.

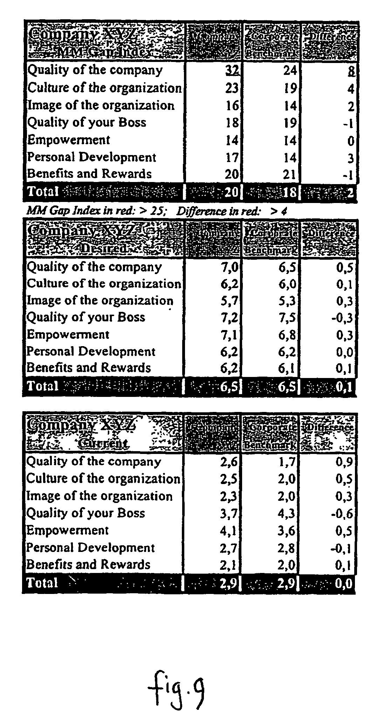

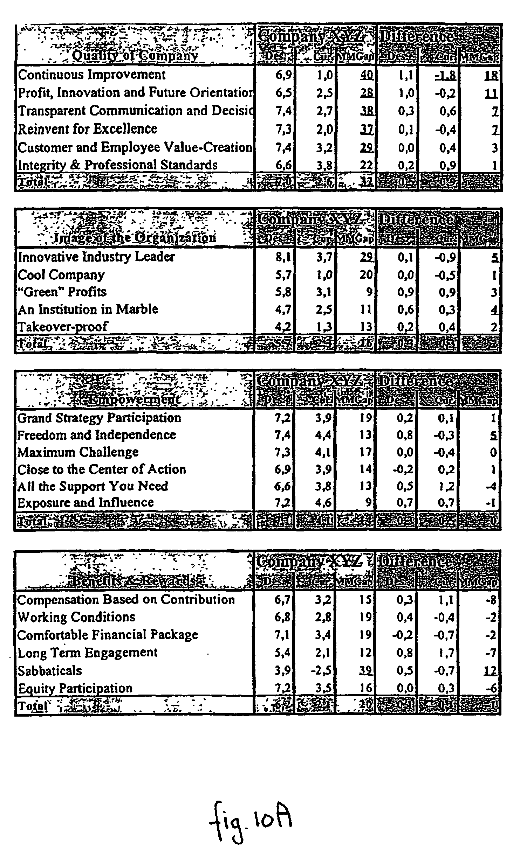

The survey used for obtaining data on the working environment from the employee is described in more detail in a copending application entitled "A METHOD OF OBTAINING INFORMATION FROM PERSONS ABOUT A PARTICULAR SUBJECT, AS WELL AS A METHOD OF DRAWING UP A SET OF QUESTIONS", filed on even date herewith and assigned application number ep99203859, and which is incorporated herein by reference in its entirety. The survey provides a number of cases, wherein each case is characterized by a plurality of attributes. A plurality of the total number of cases belong to the same main category, wherein in the embodiment described there are seven main categories which are of essential importance to provide indications on the working environment. The seven main categories are shown in Figs. 8 and 9.

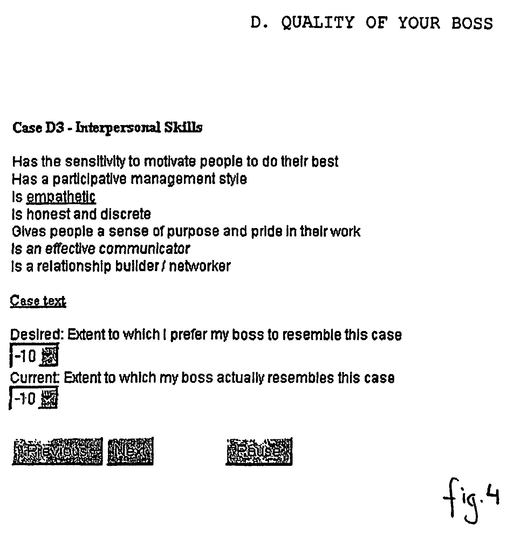

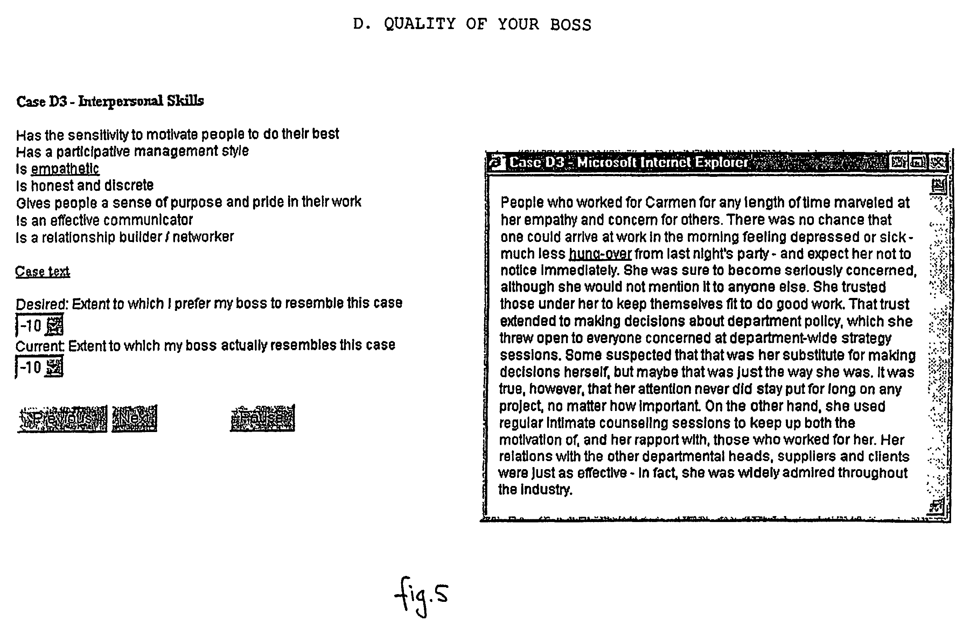

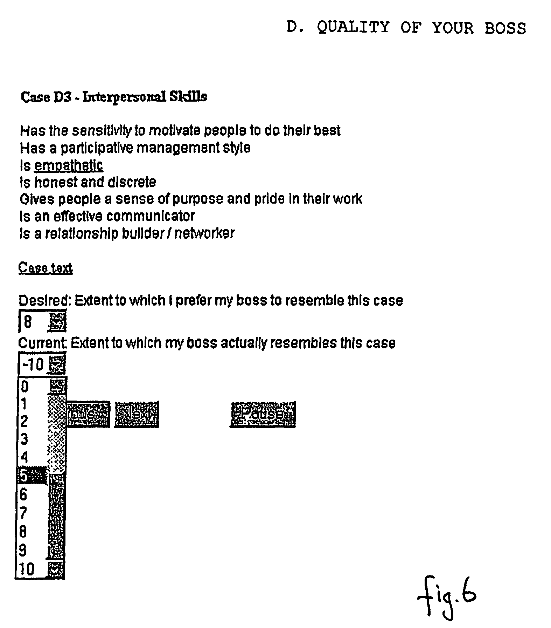

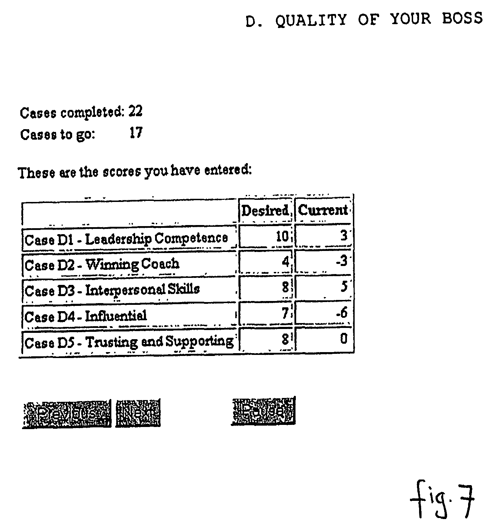

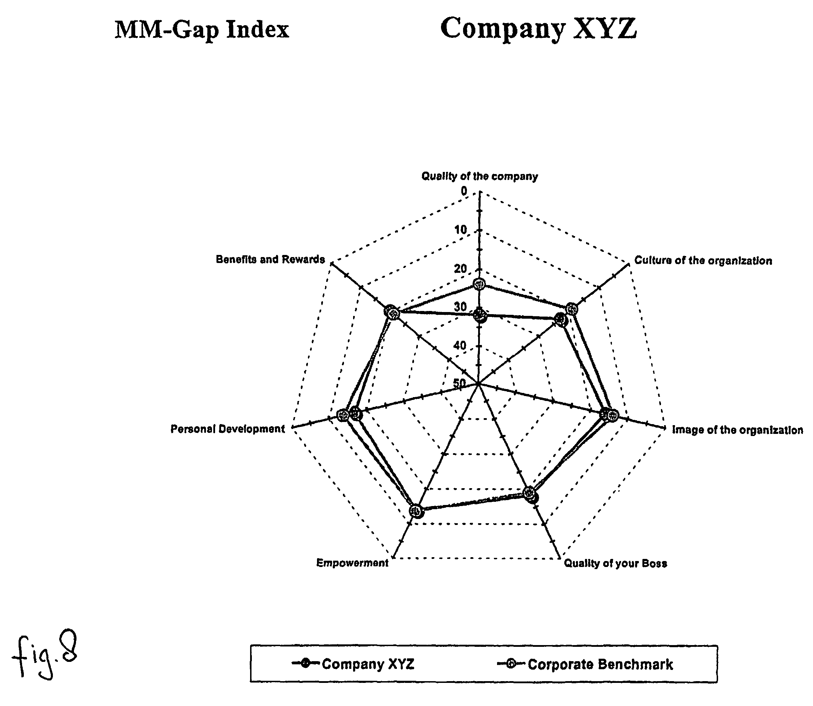

Fig. 4 provides an example of one case of the main category "quality of your boss" and shows the attributes and the possibility to provide a desired score and a current score. If an employee needs more information on the case presented, an example can be given by clicking on "case text" to obtain more information on the screen as indicated in Fig. 5. The manner to enter the score is presented in Fig. 6. When the employee has entered the scores for the cases of one category, the total scores are presented as shown in Fig. 7. The scores of one category are averaged by the computer system 33 to obtain a desired score and current score on the corresponding category. The computer system 33 can compare the survey results from a number of employees of the company. For example, the computer system 33 can obtain the averaged results of the different categories. In addition, the different categories can also be averaged to obtain a total desired score and current score on the working environment of the company.

The survey provides information on desired and current situations in the company. This allows a weighted gap-index to be determined for each practical situation. The weighted gap-index indicates the difference between the desired and current situations weighted for the score given by the employee. The gap-indexes can be stored together with the survey and averaged survey results.

The survey results can be presented to the company using a number of different methods. For example, the results can be provided in hard copy or via the network 6. Figs. 8-10 show exemplary formats to present the survey results. Fig. 8 shows a diagram in which the gap-index for the company and a benchmark company are shown. This diagram provides a quick and easy comparison between the results of the company and a benchmark, respectively. Fig. 9 shows two tables with the desired and current scores and a table with the gap-indexes obtained as weighted differences between these desired and current scores.

The benchmark desired and current scores are obtained by averaging the results of a plurality of companies, which can be either different companies or companies in the same business field. Determining the gap-index and comparing this gap-index with benchmark gap-indexes results provides a clear assessment on how the company performs in relation to the standard of competition performance.

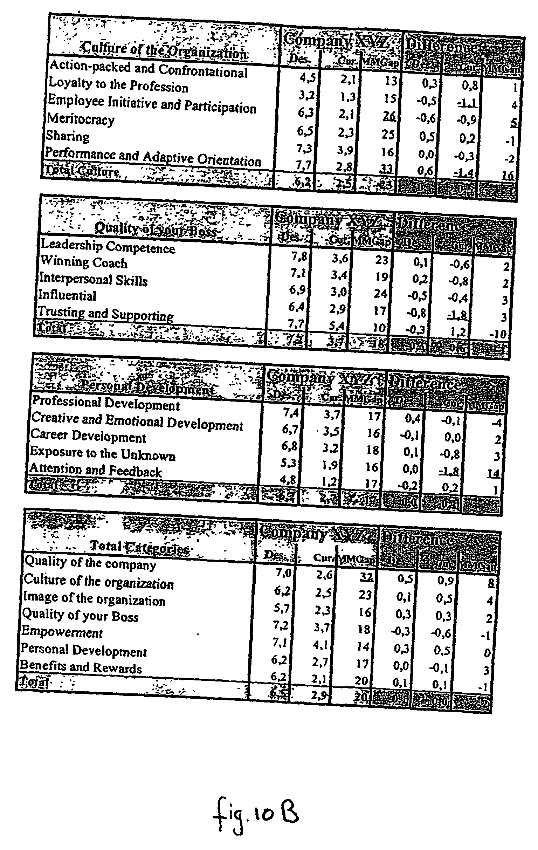

Figs. 10A and 10B show a further presentation format, wherein the results of all cases for the main categories are presented together with the differences to the benchmark results.

By classifying the participating employees in accordance with age, education, position in the company, business unit, geographical location and the like, it is also possible to provide averaged results in accordance with the classification to thereby obtain an analysis of profile-deviations at corporate and divisional levels and even possibly down to department level.

When an employee has completed the survey, the complete survey results can be presented to him on the network site, preferably together with averaged results of other surveys. These averaged results of other surveys can for example be obtained from previous surveys. As it is not known beforehand when a survey of a specific company or department or the like will be completed, these averaged results of previous surveys are used. However, when a company uses the described method to monitor the working environment, the employees participating in the survey will generally be asked to complete a survey within a specific time period and this may even be asked to be done for more than once a year. This means that it is known when all survey results will be available and each employee is then allowed to access the averaged results of its own company or class so that he can compare his own scores with these averaged results.

The invention is not to be restricted in the embodiment described which can be varied in a number of ways within the scope of the invention.

## Claims

1. A method for monitoring the working environment at at least one company, comprising storing employee data and corresponding user identifications in a first database of a first computer system, forwarding a user identification and password to the employees and to a second computer system having a second database for storing the user identifications and passwords, wherein said second computer system is fully independent from the first computer system in such a way that the second computer system is capable of conducting the survey of the employees without further assistance from the first computer system and that the first computer system can not access survey responses and correlate them with specific individuals or groups of individuals, the second computer system being connected to a computer network to provide a network site accessible for the employees by means of a computer connected to the network, the second computer system requesting an employee to enter user identification and password, wherein the second computer system compares the user identification and password entered to the user identifications and passwords as stored in the second database and upon a match presents on said network site a personal survey to each employee to obtain data on the working environment from the employee, storing the survey results in the second database together with the user identification, processing the survey results from a number of employees of one company to obtain averaged results on the working environment of this company and presenting the averaged results to the company.

2. The method according to claim 1, wherein each personal survey is monitored for completion by means of the second computer system, wherein user identifications of surveys which are not completed at a given time, are forwarded to the first computer system to obtain employee data to request the respective employees to complete the survey.

3. The method according to claim 1, wherein the survey presents a number of practical situations and for each practical situation allows to enter a score indicating to what extent this practical situation corresponds with the desired situation and the current situation, wherein a weighted gap-index is determined for each practical situation, said gap-index indicating the difference between the desired and current situations weighted for the indication provided by the employee, wherein the survey results for a plurality of interrelated practical situations are averaged to obtain desired and current scores and weighted gap-indexes for main categories describing the working environment, storing all survey and averaged results and presenting all survey and averaged results to the company.

4. The method according to claim 3, wherein the survey and averaged results of a plurality of companies are averaged to obtain benchmark survey and averaged results, wherein the survey and averaged results of a company are presented together with the benchmark results.

5. The method according to claim 3 or 4, wherein the employees are classified by obtaining personal data including one of age, education, position in the company, business unit or geographical location, wherein the survey results of the employees are averaged in dependence on at least one of the personal data to obtain intercompany benchmark results, wherein the survey and averaged results of a group of employees are presented together with the intercompany benchmark results.

6. The method according to claim 1, wherein after completion of the survey by an employee, the personal survey results of an employee are presented on said network site together with averaged results of other surveys.

7. The method according to claim 6, wherein after completion of all surveys of a company or class of employees of a company, the personal survey results of an employee are presented on said network site together with the averaged results of this class or company.

8. The method according to claim 3, wherein the employees are classified by obtaining personal data, such as for example age, education, position in the company, business unit or geographical location, wherein the survey results of the employees are averaged in dependence on one or more of these personal data items to obtain intercompany benchmark results, wherein the survey and averaged results of a group of employees are presented together with the intercompany benchmark results.

## Patentansprüche

1. Verfahren zur Überwachung der Arbeitsumgebung in zumindest einer Gesellschaft, mit dem Speichern von Angestelltendaten und entsprechenden Nutzeridentifikationen in einer ersten Datenbank eines ersten Computersystems, Befördern einer Nutzeridentifikation und eines Passworts an die Angestellten und an ein zweites Computersystem, das eine zweite Datenbank zum Speichern der Benutzeridentifikationen und Passwörter aufweist, wobei das zweite Computersystem vollständig unabhängig von dem ersten Computersystem ist, auf solche Weise, dass das zweite Computersystem die Umfrage bei den Angestellten ohne weitere Unterstützung von dem ersten Computersystem durchführen kann, und das erste Computersystem nicht auf Umfragereaktionen zugreifen kann, und sie mit bestimmten Individuen oder Gruppen von Individuen korrelieren kann, wobei das zweite Computersystem an ein Computernetzwerk angeschlossen ist, um eine Netzwerkstelle zur Verfügung zu stellen, die für die Angestellten mit Hilfe eines an das Netzwerk angeschlossenen Computers zugänglich ist, das zweite Computersystem einen Angestellten auffordert, eine Nutzeridentifikation und ein Passwort einzugeben, wobei das zweite Computersystem die Nutzeridentifikation und das Passwort, die eingegeben wurden, mit den Nutzeridentifikationen und Passwörtern vergleicht, wie sie in der zweiten Datenbank gespeichert sind, und bei einer Übereinstimmung an der Netzwerkstelle eine persönliche Umfrage jedem Angestellten darbietet, um Daten in Bezug auf die Arbeitsumgebung von dem Angestellten zu erhalten, die Umfrageergebnisse in der zweiten Datenbank zusammen mit der Nutzeridentifikation zu speichern, die Umfrageergebnisse von einer Anzahl von Angestellten einer Gesellschaft verarbeitet, um gemittelte Werte für die Arbeitsumgebung dieser Gesellschaft zu erhalten, und die gemittelten Ergebnisse der Gesellschaft zu präsentieren.

2. Verfahren nach Anspruch 1, bei welchem jede persönliche Umfrage durch das zweite Computersystem dahingehend überwacht wird, ob sie fertiggestellt ist, wobei Nutzeridentifikationen von Umfragen, die zu einem bestimmten Zeitpunkt nicht fertiggestellt sind, an das erste Computersystem befördert werden, um Angestelltendaten zu erhalten, damit die jeweiligen Angestellten aufgefordert werden, die Umfrage fertig zu stellen.

3. Verfahren nach Anspruch 1, bei welchem die Umfrage eine Anzahl an praktischen Situationen präsentiert, und es für jede praktische Situation ermöglicht, eine Punktzahl einzugeben, die anzeigt, in welchem Ausmaß diese praktische Situation der gewünschten Situation und der momentanen Situation entspricht, wobei ein gewichteter Abstandsindex für jede praktische Situation bestimmt wird, und der Abstandsindex die Differenz zwischen der gewünschten und der momentanen Situation angibt, gewichtet bezüglich der Angabe, die von dem Angestellten zur Verfügung gestellt wird, wobei die Umfrageergebnisse für mehrere verwandte, praktische Situationen gemittelt werden, um gewünschte und momentane Punktzahlen und gewichtete Abstandsindices für Hauptkategorien zu erhalten, welche die Arbeitsumgebung beschreiben, sämtliche Umfrageergebnisse und gemittelten Ergebnisse zu speichern, und sämtliche Umfrageergebnisse und gemittelten Ergebnisse der Gesellschaft zu präsentieren.

4. Verfahren nach Anspruch 3, bei welchem die Umfrageergebnisse und die gemittelten Ergebnisse mehrerer Gesellschaften gemittelt werden, um Benchmark-Umfrageergebnisse und gemittelte Ergebnisse zu erhalten, wobei die Umfrageergebnisse und die gemittelten Ergebnisse einer Gesellschaft zusammen mit den Benchmark-Ergebnissen präsentiert werden.

5. Verfahren nach Anspruch 3 oder 4, bei welchem die Angestellten dadurch eingruppiert werden, dass persönliche Daten erhalten werden, welche das Alter oder die Ausbildung oder die Position in der Gesellschaft umfassen, die Firmeneinheit oder den geographischen Ort, wobei die Umfrageergebnisse der Angestellten in Abhängigkeit von einem der persönlichen Daten gemittelt werden, um Benchmark-Ergebnisse innerhalb der Gesellschaft zu erhalten, wobei die Umfrageergebnisse und die gemittelten Ergebnisse einer Gruppe von Angestellten zusammen mit den Benchmark-Ergebnissen innerhalb der Gesellschaft präsentiert werden.

6. Verfahren nach Anspruch 1, bei welchem nach Beendigung der Umfrage durch einen Angestellten die persönlichen Umfrageergebnisse eines Angestellten an der Netzwerkstelle zusammen mit gemittelten Ergebnissen anderer Umfragen präsentiert werden.

7. Verfahren nach Anspruch 6, bei welchem nach Beendigung sämtlicher Umfragen einer Gesellschaft oder Gruppe von Angestellten einer Gesellschaft die persönlichen Umfrageergebnisse eines Angestellten an der Netzwerkstelle zusammen mit den gemittelten Ergebnissen dieser Gruppe oder Gesellschaft präsentiert werden.

8. Verfahren nach Anspruch 3, bei welchem die Angestellten durch Erhalten persönlicher Daten eingruppiert werden, beispielsweise Alter, Ausbildung, Stellung in der Gesellschaft, Firmeneinheit oder geographischer Ort, wobei die Umfrageergebnisse der Angestellten in Abhängigkeit von einem oder mehreren dieser Posten persönlicher Daten gemittelt werden, um Benchmark-Ergebnisse innerhalb der Gesellschaft zu erhalten, wobei die Umfrageergebnisse und die gemittelten Ergebnisse einer Gruppe von Angestellten zusammen mit den Benchmark-Ergebnissen innerhalb der Gesellschaft präsentiert werden.

## Revendications

1. Procédé de contrôle des conditions de travail dans au moins une entreprise, consistant à stocker des données concernant les employés et des identifications d'utilisateur correspondantes dans une première base de données d'un premier système informatique, envoyer une identification d'utilisateur et un mot de passe vers les employés et vers un second système informatique comprenant une seconde base de données pour stocker les identifications d'utilisateur et les mots de passe, procédé selon lequel : le second système informatique est entièrement indépendant du premier système informatique de manière que ledit second système informatique puisse mener une étude des employés sans aucune assistance dudit premier système informatique et de sorte que ledit premier système informatique ne puisse accéder aux résultats de l'étude ni établir de corrélation entre ces derniers et des individus ou groupes d'individus spécifiques ; ledit second système informatique est connecté à un réseau informatique afin d'offrir un site réseau accessible aux employés par le biais d'un ordinateur connecté au réseau ; ledit second système informatique demande à un employé de saisir l'identification d'utilisateur et le mot de passe ; et ledit second système informatique compare l'identification d'utilisateur et le mot de passe saisis aux identifications d'utilisateur et aux mots de passe stockés dans la seconde base de données et, lors d'une correspondance, présente sur ledit site réseau une étude personnelle à chaque employé permettant d'obtenir des données sur les conditions de travail de l'employé, puis stocke les résultats de l'étude dans la seconde base de données avec l'identification d'utilisateur, traite les résultats d'études d'un certain nombre d'employés d'une entreprise afin d'obtenir des résultats moyennés sur les conditions de travail dans cette entreprise, et présente les résultats moyennés à l'entreprise.

2. Procédé, selon la revendication 1, dans lequel chaque étude personnelle est contrôlée lors sa réalisation par le biais du second système informatique, les identifications d'utilisateur des études qui ne sont pas terminées à un moment donné étant envoyées vers le premier système informatique afin d'obtenir des données concernant les employés et de demander aux employés respectifs de terminer l'étude.

3. Procédé, selon la revendication 1, dans lequel l'étude présente un certain nombre de situations pratiques et, pour chaque situation pratique, permet de saisir une note indiquant dans quelle mesure cette situation pratique correspond à la situation voulue et à la situation actuelle, procédé selon lequel : un indice d'écart pondéré est déterminé pour chaque situation pratique ; chaque indice d'écart indique la différence entre les situation voulue et courante, pondérée par les indications fournies par l'employé ; et les résultats des études pour plusieurs situations pratiques liées entre elles sont moyennés afin d'obtenir les notes voulues et courantes et les indices d'écart moyennés pour les catégories principales décrivant les conditions de travail, tous les résultats d'études moyennés étant stockés puis présentés à l'entreprise.

4. Procédé, selon la revendication 3, dans lequel les résultats d'études moyennés de plusieurs entreprises sont moyennés de manière à obtenir des résultats d'études moyennés de référence, les résultats d'études moyennés d'une entreprise étant présentés en même temps que les résultats de référence.

5. Procédé, selon la revendication 3 ou 4, dans lequel les employés sont classés en fonction de données personnelles comprenant l'âge, le niveau d'études, le poste dans l'entreprise, le département de travail ou la situation géographique, les résultats d'études des employés étant moyennés en fonction d'au moins une de ces données personnelles afin d'obtenir des résultats de référence inter-entreprises, et les résultats d'études moyennés d'un groupe d'employés étant présentés en même temps que les résultats de référence inter-entreprises.

6. Procédé, selon la revendication 1, dans lequel, une fois que l'employé a terminé l'étude, les résultats de l'étude personnelle de l'employé sont présentés sur ledit site réseau en même temps que les résultats moyennés des autres études.

7. Procédé, selon la revendication 6, dans lequel, une fois que toutes les études de l'entreprise, ou d'une classe d'employés de l'entreprise, sont terminées, les résultats de l'étude personnelle d'un employé sont présentés sur ledit site réseau en même temps que les résultats moyennés de cette classe ou de cette entreprise.

8. Procédé, selon la revendication 3, dans lequel les employés sont classés en fonction de données personnelles comprenant l'âge, le niveau d'études, le poste dans l'entreprise, le département de travail ou la situation géographique, les résultats d'études des employés étant moyennés en fonction d'une ou de plusieurs de ces données personnelles afin d'obtenir des résultats de référence inter-entreprises, et les résultats d'études moyennés d'un groupe d'employés étant présentés en même temps que les résultats de référence inter-entreprises.
